# EUROPÄISCHE PATENTSCHRIFT

(11) **EP 0 808 482 B1**
(45) Veröffentlichungstag und Bekanntmachung des Hinweises auf die Patenterteilung: **09.06.1999**
(21) Anmeldenummer: 96900881.2
(22) Anmeldetag: 01.02.1996
(51) Int. Cl.: G05B 19/414, G05B 19/406, G06F 9/46, G06F 11/16

(54) **SYSTEMARCHITEKTUR MIT EINEM PROGRAMM, WELCHES EINEN PERIPHERIEEINGANG SPERRT, SOLANGE ES INFOLGE VON ZEITSCHEIBENVERFAHREN NICHT AUF EINEM PROZESSOR LÄUFT**
SYSTEM ARCHITECTURE WITH A PROGRAM THAT BLOCKS A PERIPHERAL INPUT WHEN THE PROGRAM IS NOT RUNNING ON A PROCESSOR DUE TO TIME-SLICING
ARCHITECTURE DE SYSTEME COMPRENANT UN PROGRAMME QUI BLOQUE UNE ENTREE PERIPHERIQUE TANT QU'IL NE SE DEROULE PAS SUR UN PROCESSEUR EN RAISON DU DECOUPAGE DU TEMPS

(30) Priorität: 10.02.1995 DE 19504404
(43) Veröffentlichungstag der Anmeldung: 26.11.1997
(73) Patentinhaber: PILZ GmbH & CO., 73760 Ostfildern (DE)
(72) Erfinder: HECKEL, Andreas, D-71334 Waiblingen (DE); RUPP, Roland, D-73110 Hattenhofen (DE); WEISHAAR, Christoph, D-71332 Waiblingen (DE); WOHNHAAS, Klaus, D-70372 Stuttgart (DE)
(74) Vertreter: Patentanwälte Rüger, Barthelt & Abel
(86) Internationale Anmeldenummer: DE9600145
(87) Internationale Veröffentlichungsnummer: WO9624891

(56) Entgegenhaltungen:
- EP-A- 0 298 396
- US-A- 4 484 270

## Beschreibung

In zunehmenden Maße wird der Betrieb von Maschinen automatisiert, und zwar auch von Maschinen, die wegen der Vielzahl unabhängiger Achsen einen wesentlichen Steuerungsaufwand haben. Diese Steuerungen müssen, um Gefahren für Menschen und Maschinen soweit wie möglich auszuschließen, in einem sehr hohen Grade sicher sein, zumindest hinsichtlich solcher Steueranweisungen, deren fehlerhafte Betätigung für die Menschen oder die Maschinen katasrophale Folgen haben kann.

In der Vergangenheit hat man sich dabei im wesentlichen auf die Relaistechnik verlassen, in der Annahme, daß Relais und Schütze vergleichsweise sichere Steuerungsmittel sind. Allerdings mußte auch bei dieser Technik Redundanz und eine Art von Prüfprogrammen vorgesehen werden, durch die sich die Relais hinsichtlich ihrer Funktion wechselseitig überwacht bzw. überprüft haben. Der Aufwand an Relais, selbst für vergleichsweise einfache Steuerungen von beispielsweise Exzenterpressen, war vom Platzbedarf her gesehen enorm. Komplexere sichere Steuerungen, die in der Lage sind, zu erkennen und beim Erkennen des Fehlers die Anlage zur sicheren Seite hin stillzusetzen, sind in der Relaistechnik wegen des Platzbedarfes praktisch nicht zu beherrschen.

Man ging deswegen dazu über, die Steuerungen anstatt mit elektromechanischen Bauteilen mit elektronischen Bauteilen aufzubauen, obwohl man sich bewußt war, daß elektronische Bauelemente unter Umständen gegenüber äußeren Einflüssen empfindlicher sind und kompliziertere Fehler auftreten können. Um diese Schwierigkeiten einigermaßen zu beherrschen, wurden die Steuerungen mehrkanalig ausgeführt, wobei sich die Kanäle gegenseitig überwacht haben.

Mit noch weiter fortschreitender Automatisierung wurde der Übergang zu mikroprozessorgesteuerten Anlagen erforderlich, womit noch eine weitere Qualität von Fehlern, nämlich Software-Fehler mit hinzukommen.

Die Implementierung von Steuerungen mit Hilfe von Mikroprozessoren und Programmen macht aber nur dann Sinn, wenn es gleichzeitig dem Anwender ermöglicht wird, die Steuerungen zu erweitern und in die Steuerungen weitere Maschinen oder Maschinenbewegungen hineinzunehmen, die unter Umständen auch nicht sicherheitsrelevant sind. Dabei darf keineswegs dieses nicht notwendigerweise sichere Funktionen steuernde Programmteil jenes Programmteil beeinflussen, das sichere Funktionen beaufsichtigt. Andernfalls könnte es zu schwerwiegenden Störungen kommen, deren Ursachen praktisch nicht aufzufinden sind, weil sie unter Umständen von der zeitlichen Korrelation bestimmter Eingangssignale abhängig sind.

Dokument US-A-4 484 270 beschreibt eine zentrale Vorrichtung zum Kontroll der Zugangsberechtigungen in einem Mehrprozessor- und Mehrperipheriesystem. Diese Vorrichtung erlaubt einem Datenverarbeitungssystem den exclusiven oder mehreren Datenverarbeitungssystemen den geteilten Zugang zu einer Peripherieeinheit.

Ausgehend hiervon ist es Aufgabe der Erfindung, eine Systemarchitektur zu schaffen, die es gestattet, auf einem Prozessor sicherheitsüberprüfte und nicht sicherheitsüberprüfte Programme laufen zu lassen, ohne daß die Gefahr besteht, daß das nicht überprüfte Programm den Lauf des geprüften Programms in unerwünschter Weise beeinflussen oder stören kann.

Diese Aufgabe wird erfindungsgemäß durch die Systemarchitektur mit den Merkmalen des Anspruches 1 gelöst.

Aus Gründen des elektrischen Aufwandes und des Aufwandes an Bauteilen ist es sinnvoll, in ein und demselben Prozessor zwei verschiedene Programmkomplexe ablaufen zu lassen, wobei immer eine Kontrolle darüber bestehen soll, wie die beiden Programmkomplexe miteinander in Wechselwirkung treten. Durch die Verwendung von Peripheriemitteln, die mit Inhibiteingängen ausgerüstet sind, kann sichergestellt werden, daß der zweite Programmkomplex an die Peripheriemittel keine Befehle auszugeben vermag, von denen der erste Programmkomplex keine Kenntnis hat. Wenn beispielsweise der erste Programmkomplex ein sicherer verifizierter Programmkomplex ist, schaltet er, bevor er den Prozessor oder Rechnerkern an den zweiten Programmkomplex abgibt, die ihm zugeordneten und nur von ihm zu kommandierenden Peripheriemittel in einen Zustand, in dem sie keine Befehle an ihren Ein- und Ausgängen annehmen. Ein lesender Zugriff auf die Register dieser Peripheriemittel kann dabei durchaus zulässig bleiben. Wenn nach dem Sperren dieser Peripheriemittel der zweite Programmkomplex den Prozessor bzw. Rechnerkern erhält, kann er dort im wesentlichen autonom laufen. Sollte infolge von Programmierfehlern oder sonstiger Fehler an den Daten der zweite Programmkomplex in nicht konformer Weise versuchen, schreibend auf die Peripheriemittel des ersten Komplexes zugreifen, werden die gesperrten Peripheriemittel diese ihnen zugestellten Eingaben ignorieren und nicht ausführen.

Der einzige Fehler, der dann noch auftreten könnte, bestünde darin, daß der zweite Programmkomplex das Inhibitsignal zurücknimmt, womit die betreffenden Peripheriemittel, die zu dem ersten Programmkomplex gehören, auf die Befehle des zweiten Programmkomplexes fälschlicherweise hören würden.

Sobald jedoch der zweite Programmkomplex den Prozessor freigibt, entweder freiwillig, weil er an einer entsprechenden Programmstelle angelangt ist oder zwangsweise aufgrund eines von außen kommenden Interrupts, erhält der erste Programmkomplex Kenntnis von diesem feindlichen Verhalten des zweiten Programmkomplexes, indem er den Zustand auf der Inhibitleitung abfragt. Sollte er dabei Manipulationen an der Inhibitleitung erkennen, hat er die Möglichkeit, in geordneter Weise das gesamte System, zu dem die Systemarchitektur gehört, stillzusetzen.

Selbstverständlich wird die neue Systemarchitektur mit weiteren Sicherungsmitteln verknüpft, um die Sicherheit so hoch wie möglich zu machen. Insoweit ist die beschriebene Systemarchitektur lediglich ein Ausschnitt aus einem gesamten als sicher ansgesehenen System, dessen Sicherheit durch wechselweises Abfragen und Überprüfen von Nachbarkanälen und deren Daten in der bekannten Weise sichergestellt wird.

Je nach Anwendung kann es sein, daß die ersten Peripheriemittel ausschließlich für den ersten Programmkomplex reserviert sind oder daß unter den ersten Peripheriemitteln wenigstens eines ist, auf das zulässigerweise von beiden Programmkomplexen aus schreibend und/oder lesend zuzugreifen ist.

Je nachdem, wie die beiden Programmkomplexe zueinander stehen sollen, kann es zweckmäßig sein, einen Speicherbereich zu haben, über den die beiden Programmkomplexe miteinander kommunizieren, da sie nur nacheinander den Prozessor haben, also folglich auch nicht gleichzeitig arbeiten können. Sie brauchen deswegen einen gemeinsamen "Briefkasten", über den sie Nachrichten oder Daten austauschen können.

Dieser Kommunikation der Programmklomplexe dienende Speicher ist vorzugsweise in den zweiten Speichermitteln untergebracht, denn dadurch wird zwangsläufig sichergestellt, daß die Daten und Befehle des ersten Programmkomplexes, die sich in den ersten Speichermitteln befinden, nicht durch ein Fehlverhalten des zweiten Programmkomplexes geändert werden können.

Ein besonders sicheres System wird erhalten, wenn die ersten Speichermittel ausschließlich für den ersten Programmkomplex reserviert sind. Gleiches kann grundsätzlich auch für den zweiten Programmkomplex bestehen, so daß ein weiterer Speicherbereich als Kommunikationsbereich für die Programmkomplexe bereitgestellt wird.

Wenn durch andere Maßnahmen bestimmte Fehler erkannt werden können, ist es möglich, die beiden Speichermittel hardwaremäßig in ein und demselben Speicher unterzubringen und lediglich über Adressen voneinander zu trennen. Wenn hingegen auch mit Fehlern bei der Adressierung des Speichers zu rechnen ist oder sonstige Fehler an den Speichern zu befürchten sind, ist es vorteilhaft, wenn für die ersten und die zweiten Speichermittel hardwäremäßig getrennte Speicher verwendet werden, d.h. die ersten und die zweiten Speichermittel werden in getrennten Speicherchips untergebracht.

In aller Regel hat der erste Programmkomplex die höhere Priorität, d.h. er muß selbst bei nichtkonformem Verhalten des zweiten Programmkomplexes innerhalb einer vorgegebenen Zeit den Prozessor zurückerhalten, um seine Steuerfunktion ausführen zu können. Dies kann unter Umständen dann nicht der Fall sein, wenn sich der zweite Programmkomplex in einer endlosen Schleife aufhängt und nicht mehr jene Programmstelle erreicht, an der er freiweillig gen Prozessor zurückgibt. Um solche Fehler auszuschließen, ist der Prozessor vorzugsweise mit einer Interruptsteuerung versehen, an die ein Timer angeschlossen ist. Dadurch kann der Prozessor zwangsweise den zweiten Programmkomplex beseitigen, damit der erste Programmkomplex wiederum in den Besitz des Prozessors gelangt.

Die Sicherheit des Gesamtsystems läßt sich erhöhen, wenn parallel zu dem ersten Prozessor wenigstens ein weiterer Prozessor existiert, in dem ein dem ersten Programmkomplex verwandtes Programm läuft, so daß beide Prozessoren bzw. Programmkomplexe ständig ihre Daten und Rechenergebnisse miteinander vergleichen können, um bei Differenz der Ergebnisse die gesteuerte Anlage in einer sinnvollen ungefährlichen Weise stillsetzen zu können.

Beispielsweise kann der auf dem dritten Prozessor laufende Programmkomplex aus der Sicht seiner ihm zugeordneten Peripheriemittel dasselbe Verhalten zeigen wie der erste Programmkomplex aus der Sicht seiner Peripheriemittel, während jedoch beide Programmcodes unterschiedlich gestaltet sind. Diese unterschiedliche Gestaltung der Programmcodes wird zwangsläufig erreicht, wenn der erste und der zweite Prozessor unterschiedlich sind, beispielsweise in der Registerlänge oder der zur Verfügung stehenden Befehle.

Schließlich kann der weitere Prozessor mit dazu herangezogen werden, zu überprüfen, ob, während der erste Programmkomplex den Prozessor nicht hatte, der zweite Programmkomplex in unzulässiger Weise nach einer Veränderung der Signale an den Inhibiteingängen die Daten an den Peripheriemitteln verändert hat. Nach Rückkehr des ersten Programmkomplexes ist dieser in der Lage, von den Peripheriemitteln die Daten zu lesen und mit den Daten zu vergleichen, die der dritte Programmkomplex von seinen Peripheriemitteln erhalten hat. Sobald dort ein Unterschied auftritt, ist das System wiederum in der Lage, die gesteuerte Maschine stillzusetzen.

Im übrigen sind Weiterbildungen der Erfindung Gegenstand von Unteransprüchen. Ferner ist ohne weiteres zu sehen, daß beliebige Kombinationen der Unteransprüche möglich sind. Der Aufbau der übrigen Systemumgebung spielt dabei für die neue Systemarchitektur keine oder keine wesentliche Rolle.

In der Zeichnung ist ein Ausführungsbeispiel des Gegenstandes der Erfindung dargestellt. Es zeigen:
Fig. 1 ein Blockschaltbild der neuen Systemarchitektur und

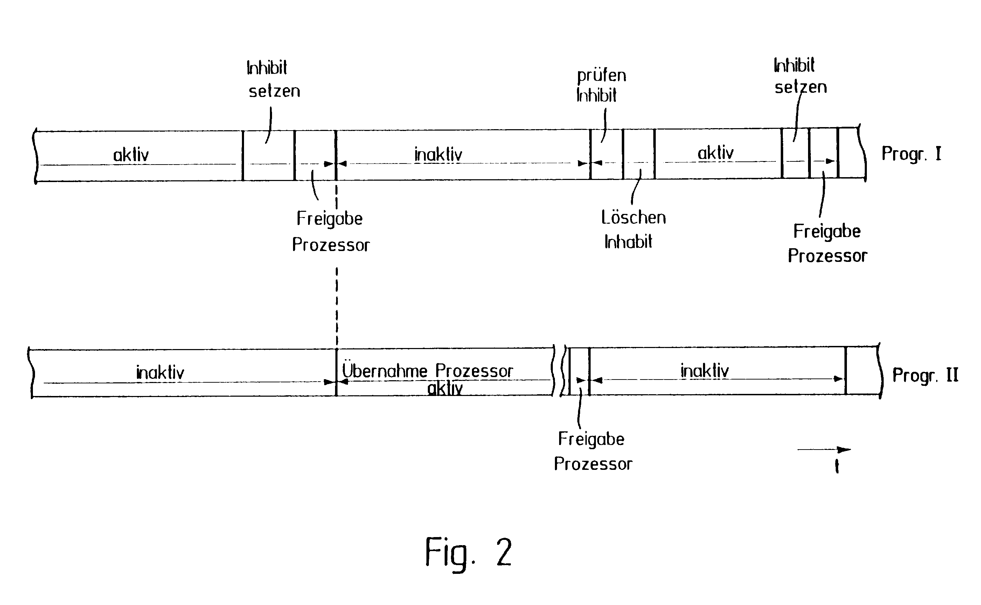

Fig. 2 stark schematisiert das zeitliche Verhalten der beiden Programmkomplexe, die auf dem ersten Prozessor laufen.

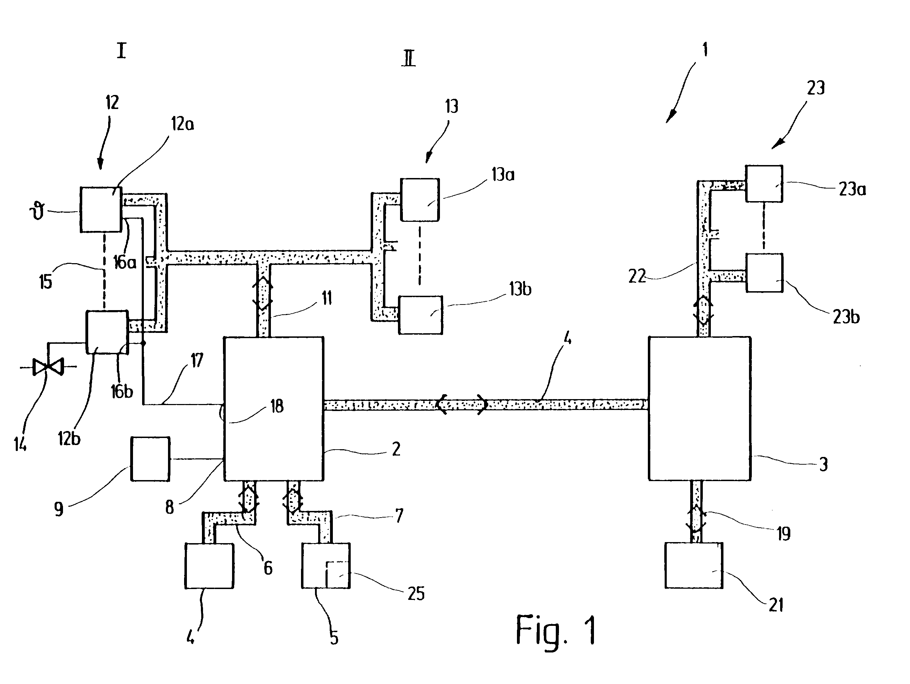

In Fig. 1 ist in einem Blockschaltbild eine neue Systemarchitektur 1 für eine Prozeßsteuerung veranschaulicht (der gesteuerte Prozeß selbst ist nicht gezeigt und kann eine Werkzeugmaschine, ein chemischer Przeß oder drgleichen sein). Diese Systemarchitektur 1 weist einen ersten Prozessor 2 sowie einen zweiten Prozessor 3 auf, die über Kommunikatinsleitungen 4 miteinander verbunden sind. An den Prozessor 2 sind zwei voneinander getrennte Speicher 4 und 5 ebenfalls über Kommunikationsleitungen 6 und 7 angeschlossen. Diese beiden Speicher 4 und 5 sind in physikalisch voneinander getrennten Speicherbausteinen hardwaremäßig realisiert.

Wenigstens der erste Prozessor 2 weist eine Interruptsteuerung mit einem entsprechenden zugeordneten Eingang 8 auf, an den eine Uhr oder ein Timer 9 angeschlossen ist.

Je nach gewählter Prozessorarchitektur kann der Timer 9 auch Bestandteil des Prozessors 2 selbst sein.

Über ein Bussystem oder entsprechende Kommunikationsleitungen 11 sind an den ersten Prozessor 2 zwei Gruppen 12 und 13 von Peripheriemitteln angeschlossen.

Unter Peripheriemitteln sollen hierbei jene Hardware-Einrichtungen verstanden sein, wie sie bei Prozeß- oder Maschinensteuerungen zur Steuerung des Prozesses verwendet werden. Dabei wird zwischen solchen Periepheriemitteln unterschieden, die lediglich Informationen des Prozesses, der zu steuern ist, an die Steuerung melden als auch jene Peripheriemittel, die Befehle der Steuerung in Zustandsänderungen des Prozesses umsetzen, beispielsweise indem sie Relais, Magnetventilen, elektromechanischen Verriegelungen u.dgl. abetätigen.

Als Beispiel für ein lediglich an die Steuerung Informationen übermittelndes Peripheriemittel ist ein Peripheriemittel 12a gezeigt, das beispielsweise Temperatur- oder Positionsangaben an die Steuerung übergibt. Der von dem Block umrahmte Teil soll in diesem Falle die gesamte notwendige Hardware symbolisieren, die notwendig ist, um das physikalische Signal in die elektrische Größe umzuwandeln, die mit der Schnittstelle, wie sie durch die Kommunikationsleitungen 11 und den entsprechenden Eingangsanschluß des ersten Prozessors 2 gebildet ist, kompatibel sind. Der vom Grundsatz her lesende Zugriff auf das Peripheriemittel 16a bedeuted aber nicht, daß auch schreibende Zugriffe möglich sind, die innerhalb des Peripherimittels 12a Zustandsänderungen hervorrufen. Ein zweites Peripheriemittel 12b soll alle jene Peripheriemittel symbolisieren, die von dem ersten Prozessor 2 über die Kommunikationsleitungen 11 gelieferten Informationen oder Befehle in eine physikalische Größe umsetzt. Über die Schnittstellenmittel 12b wird also in den ablaufenden und zu steuernden Prozeß unmittelbar eingegriffen, beispielsweise durch Betätigung eines schematisch angedeuteten elektromagnetischen Ventils 14. Andere elektromechanische Wandler, wie Gleich- oder Wechselstrommotoren, Heizeinrichtungen, Zündeinrichtungen u.dgl. können ebenfalls Bestandteil des betreffenden Peripheriemittels 12b sein.

Die zwischen den beiden Peripheriemitteln 12a und 12b gezeichnete gestrichelte Linie 15 soll andeuten, daß eine weit größere Anzahl von Peripheriemitteln vorhanden sein kann, und in der Regel auch vorhanden ist, als nur die beiden Peripheriemittel 12a und 12b.

Die beiden Peripheriemittel 12a und 12b sind zusätzlich zu den Kommunikationsleitungen 11 jeweils mit einem Inhibiteingang 16a bzw. 16b versehen, der an eine gemeinsame Inhibitleitung 17 angeschlossen ist, die die Inhibiteingänge 16a und 16b mit einem entsprechenden E/A-Port 18 des ersten Prozessors 2 verbindet.

Die zweite Gruppe von Peripheriemitteln ist ähnlich zusammengesetzt wie die erste Gruppe 12, d.h. auch sie besteht aus Peripheriemitteln, die Informationen zu dem ersten Prozessor 2 liefern als auch aus Peripheriemitteln, die Befehle des ersten Prozessors 2 in entsprechende physikalische oder elektrische Größen umsetzen. Diese Peripheriemittel 13a bis 13b der zweiten Gruppe 13 sind ausgangsseitig in Richtung auf den zu steuernden Prozeß von den Peripheriemitteln 12a bis 12b unterschiedlich.

Der zweite Prozessor 3 dient der Erhöhung der Redundanz, weshalb er sich von dem ersten Prozessor 2 hardwaremäßig unterscheidet, d.h. er hat beispielsweise einen anderen Befehlssatz und/oder eine andere Registerlänge. Ferner ist er in einem eigenen Chip realisiert oder sogar auf einer eigenen Leiterplatte angeordnet. Der zweite Prozessor 3 ist über Kommunikationsleitungen 19 mit einem ihm zugeordneten Speicher 20 verbunden und über weitere Kommunikationsleitungen 22 mit einem eigenen Satz von Peripheriemitteln 23, die aus der Sicht des zu steuernden Prozesses dieselbe Funktion haben wie die Peripheriemittel 12a bis 12b der ersten Gruppe 12 und die gegebenenfalls, soweit es die Ausführung von Befehlen anbelangt, ausgangsseitig zum Prozeß hin UND-verknüpft sind, damit Zustandsänderungen in dem Prozeß oder der Maschine erste durchgeführt werden, wenn die beiden Prozessoren 2 und 3 über die betreffenden Peripheriemittel 12 bzw. 13 dieselben Ausgangsbefehle geben.

Mit der neuen Systemarchitektur 1 ist es möglich, zwei unterschiedliche Programmkomplexe ablaufen zu lassen, wobei der eine Programmkomplex ein verifizierter und sicherheitsüberprüfter Programmklomplex ist, während der andere zweite Programmkomplex ein Programmkomplex ist, an den weniger hohe Sicherheitsanforderungen gestellt werden. Der sichere Programmkomplex hat ein Pendant in dem Prozessor 3 und ist dort mit einem entsprechenden Programm realisiert, das ausschließlich in dem Speicher 21 abgelegt ist und dessen Daten sich ebenfalls nur in dem Speicher 21 befinden, soweit sie nicht von den Peripheriemitteln 23 kommen bzw. dort gehalten werden.

In dem ersten Prozessor 2 läuft der verifizierte und für die Sicherheit des gesteuerten Prozesses relevante Programmkomplez, im weiteren ersten Programmkomplex genannt, ab sowie ein zweiter Programmkomplex, der für die Sicherheit des gesteuerten Prozesses nicht ausschlaggebend ist. Der erste Programmkomplex wird durch ein Programm oder einen Satz von Programmen realisiert, der in dem Speicher 4 abgelegt ist. Der zweite Programmkomplex, ebenfalls ein Programm oder ein Satz von Programmen, findet sich in dem Speicher 5.

Der erste Programmkomplex ist, weil er sicherheitsüberprüft ist, befugt und dazu vorgesehen, die Peripheriemittel der zweiten Gruppe 12 anzusprechen und über sie Befehle auszugeben, die aktiv in den gesteuerten Prozeß bzw. die Maschine eingreifen und dort Zustandsänderungen vornehmen. Ein Beispiel für ein solches Peripheriemittel ist das exemplarisch angegebene Peripheriemittel 12b.

Außerdem greift der erste Programmkomplex auch auf die Peripheriemittel 12 zu, die Informationen aus dem Prozeß an den Programmkomplex übertragen; beispielsweise über das Peripheriemittel 12a.

Für die weitere Beschreibung sei zunächst einmal angenommen, daß der zweite Programmkomplex ausschließlich mit den Peripheriemitteln der zweiten Gruppe 13 zusammenarbeitet, also weder Daten von der ersten Gruppe 12 erhält noch auf diese Peripheriemittel der ersten Gruppe 12 schreibend zugreift. Diese Annahme gilt für ein fehlerfreies Konzept für den zweiten Programmkomplex und unter der Bedingung, daß das fehlerfreie Konzept auch fehlerfrei in die entsprechenden Programme eingesetzt ist.

Für die weitere Funktions- und Ablaufbeschreibung sei ferner angenommen, daß die Initialisierungsphase für die Programmkomplexe bereits durchlaufen ist und sich das System im Normalbetrieb befindet. Unter diesen Umständen wechseln sich in dem ersten Prozessor 2 der erste und der zweite Programmkomplex periodisch ab. Das Verhalten wird in einerm Zeitpunkt beobachtet, zu dem, wie in dem oberen Balken mit der Bezeichnung "Prog. I" angegeben, der erste Programmkomplex aktiv ist, d.h. Daten von dem zu steuernden Prozess erhält und entsprechende Befehle, wenn erforderlich, an den Prozeß abgibt. Gleichzeitig vergleicht während dieser Phase der erste Programmkomplex ständig seine gemessenen und berechneten Daten mit den entsprechenden Daten, die der auf dem zweiten Prozessor 3 laufende Programmkomplex von seiner Peripherie erhält bzw. aus den erhaltenen Daten berechnet. Solange dieser Vergleich Identität zeigt, arbeitet das System weiter. Stellen die beiden Prozessoren 2 und 3 jedoch Abweichungen fest, wird umgehend entsprechend vorher festgelegter Routinen, der gesamte Prozeß stillgesetzt.

Wenn dies nicht der Fall ist, d.h. der Datenvergleich der beiden Prozessoren 2 und 3 keinen Fehler erkennen läßt, kommt der erste Programmkomplex innerhalb einer maximalen Zeitgrenze an eine Stelle, an der er den Prozessor 2 nicht mehr benötigt. Beim Erreichen dieser Stelle werden zunächst von dem zweiten Programmkomplex über den entsprechenden Ausgang 18 die Inhibiteingänge 16a und 16b der Peripheriemittel der ersten Gruppe 12 mit einem Sperrsignal beaufschlagt. Dadurch gelangen die Peripheriemittel der ersten Gruppe 12 in einen Zustand, in dem sie über die Kommunikationsleitungen 11 eventuell ankommende schreibende Signale, die ihren Zustand verändern würden, ignorieren. Ein lesender Zugriff in dem Sinne, daß von den Peripheriemitteln bzw. den zugehörigen Interfacekarten über die Kommunikationsleitungen 11 Daten abgefragt werden, bleibt jedoch nach wie vor möglich.

Nachdem der erste Programmkomplex dieses Inhibitsignal an seine ihm zugeordneten Peripheriemittel 12 abgesandt hat, gibt er den ersten Prozessor 2 frei. Die Freigabe des ersten Prozessors 2 durch den ersten Programmkomplex hat zur Folge, daß nun der zweite Programmkomplex, der in dem Speicher 5 abgelegt ist, den zweiten Prozessor 2 erhält und somit die Möglichkeit bekommt, die dem zweiten Programmkomplex zugeordneten Peripheriemittel 13 zu bedienen. Unterstellt, der zweite Programmkomplex arbeitet fehlerfrei, dann greift er nicht schreibend, also zustandsändernd, auf die Peripheriemittel 12 zu, die für den ersten Programmkomplex reserviert sind. Sollte er dies aufgrund eines Programmierfehlers oder eines sonstigen Fehlers doch tun bzw versuchen, hat der schreibende Zugriff keine Wirkung, denn über die Inhibiteingänge 16a und 16b sind die Peripheriemittel 12 gegen schreibende Zugriffe gesperrt.

Vor dem Ablauf eines vorbestimmten Zeit erreicht der zweite Programmkomplex eine Programmstelle, an der er freiwillig den ersten Prozessor 2 abgibt. Der erste Prozessor 2 kann daraufhin wiederum den ersten Programmkomplex starten. Dieser erste Programmkomplex prüft zunächst, ob die Peripheriemittel 12 nach wie vor das Inhibitsignal haben. Sodann wird das Inhibitsignal gelöscht, damit der erste Programmkomplex wieder normal mit seinen Peripheriemitteln 12 kommunizieren kann. Als nächstes erfolgt ein Datenvergleich zwischen dem ersten Programmkomplex des ersten Prozessors 2 mit dem auf dem zweiten Prozessor 3 laufenden Programmkomplex und, falls dieser Vergleich keine Differenzen aufgezeigt hat, läuft der erste Programmkomplex auf dem ersten Prozessor 2 normal ab.

Sollte hingegen bei der Reinitialisierung des ersten Programmkomplexes dieser feststellen, daß das Inhibitsignal nicht mehr vorhanden ist, geht der erste Programmkomplex davon aus, daß sich der zweite Programmkomplex nicht konform verhalten hat und in unzulässiger Weise versucht hat, Steuerbefehle über die entsprechenden Peripheriemittel 12 auszugeben. Da dies eine gefährliche Fehlersituation ist, wird anschließend umgehend der gesteuerte Prozeß stillgesetzt.

Ein weiterer Fehler des ersten Programmkomplexes kann darin bestehen, daß er das Inhibitsignal löscht und anschließend wieder setzt, um zwischenzeitlich schreibend auf die Peripheriemittel 12 zugreifen zu können. Ein solches Fehlverhalten durch den Vergleich der Daten des ersten Programmkomplexes mit den Daten, die der Programmkomplex auf dem zweiten Prozessor 3 hält, ermittelt. Somit ist mit einer sehr hohe Sicherheit gewährleistet, daß der zweite Programmkomplex, der keiner sicherungstechnischen Prüfung unterliegt, nicht wegen Konzept- oder sonstiger Fehler, den sicherheitstechnisch überprüften ersten Programmkomplex stört. Dennoch können die beiden Programmkomplexe auf ein und demselben Prozessor ablaufen, und sich gegebenenfalls sogar jene Peripheriemittel teilen, über die lediglich Daten in Richtung auf den betreffenden Prozessor übermittelt werden. Der Anwender, der den zweiten Programmkomplex erstellt, kann sich komplizierte Fehlerbetrachtungen und Fehlerbehandlungsroutinen ersparen, wenn er alle sicherheitsrelevanten Befehlsabläufe in dem ersten Programmkomplex unterbringt und nur für diesen Programmkomplex braucht er dann eine komplizierte Fehlerbetrachtung anzustellen. Nachträgliche Änderungen am zweiten Programmkomplex sind ohne weiteres möglich, womit sich die Programmierung der neuen Systemarchitektur wesentlich vereinfacht. Insbesondere genügt es, wenn von der aufsichtsführenden Behörde immer nur die Hardware einschließlich dem ersten Programmkomplex geprüft und abgenommen wird. Ohne diese Zweiteilung wäre der Anwender gezwungen, bei jeder kleineren Änderung auch an nicht sicherheitsrelevanten Befehlsfolgen eine neue Überprüfung durch die aufsichtsführende Behörde vornehmen lassen zu müssen.

In der eben beschriebenen Weise lösen sich der erste und der zweite Programmkomplex auf dem ersten Prozessor 2 ständig ab. Sie erhalten dabei nach einem Zeitscheibenverfahren den ersten Prozessor und geben ihn, Fehlerfreiheit vorausgesetzt, auch innerhalb der Zeitscheibe freiwillig wieder ab. Falls jedoch eines der beiden Programmkomplexe in eine endlose Schleife gerät, läuft vor der Rückgabe des Prozessors 2 der Timer 9 ab, der daraufhin an dem Interrupteingang 8 einen Interrupt produziert, was den Prozessor veranlaßt, in eine Alarmroutine überzugehen, die den jeweils laufenden Programmkomplex abbricht und je nach dem, ob der Fehler in dem sicherheitsrelevanten Teil oder in dem nicht sicherheitsrelevanten Teil entstanden ist, entweder lediglich eine Fehlermeldung herausgibt oder das System nebengeordnet sillsetzt.

Schließlich ist es möglich, die beiden Programmkomplexe über einen gemeinsamen Speicherbereich 25 miteinander kommunizieren zu lassen, beispielsweise wenn der nicht sichere zweite Programmkomplex Daten benötigt, die der erste sichere Programmkomplex berechnet hat. Um eine Gefährdung des ersten Programmkomplexes auszuschließen, ist deswegen der Kommunikationsbereich in den Speicher 5 verlegt, in dem sich der zweite Programmkomplex befindet und wo er auch seine Daten hält. Fehlerhafte schreibende Zugriffe in diesen der Kommunkation dienenden Speicherbereich 25 können somit ebenfalls nicht den verifizierten Programmkomplex beeinträchtigen.

Eine Systemarchitektur verwendet wenigstens zwei Prozessoren, die gemeinsam einen Prozeß steuern und ständig ihre Daten miteinander vergleichen. Auf einem der beiden Prozessoren läuft ein Programmkomplex, der hinsichtlich der möglichen Fehler überprüft ist sowie ein nicht überprüfter Programmkomplex. Um eine Störung des überprüften Programmkomplexes durch den nicht überprüften auszuschließen, sind die Peripheriemittel, die mit dem überprüften Programmkomplex zusammenarbeiten, mit Inhibiteingängen versehen und der geprüfte Programmkomplex sperrt über die Inhibiteingänge die für ihn reservierten Peripheriemittel, ehe er die Regie an den nicht überprüften Programmkomplex abgibt.

## Patentansprüche

1. Systemarchitektur (1)
mit einem ersten Prozessor (2),
mit dem ersten Prozessor (2) zugeordneten ersten Speichermitteln (4),
mit ersten dem ersten Prozessor (2) zugeordneten Peripheriemitteln (12), wie Interfaceschaltungen und dgl., die Ein/Ausgänge und mit dem ersten Prozessor (2) verbundene Inhibiteingänge (16) aufweisen, wobei letztere dazu dienen, die ersten Peripheriemittel (12) dagegen zu sperren, Informationen über die Eingänge entgegenzunehmen, wenn an die Inhibiteingänge (16) ein Inhibitsignal übermittelt wurde,
mit einem auf dem ersten Prozessor (2) lauffähigen ersten Programmkomplex (Prog. I), der zumindest überwiegend mit den ersten Speichermitteln (4) des ersten Prozessors (2) zusammenwirkt und derart arbeitet, daß er, wenn er auf dem ersten Prozessor (2) läuft, beim Erreichen festgelegter Bedingungen an die ihm zugeordneten Peripheriemittel (12) ein Inhibitsignal abgibt und den ersten Prozessor (2) freigibt, und daß er sobald er den ersten Prozessor (2) zurückerhält das Inhibitsignal zurücknimmt oder löscht,
mit dem ersten Prozessor (2) zugeordneten zweiten Speichermitteln (5),
mit zweiten dem ersten Prozessor (2) zugeordneten Peripheriemitteln (13), wie Interfaceschaltungen und dgl., die mit dem ersten Prozessor (2) verbundene Ein/Ausgänge aufweisen,
mit einem auf dem ersten Prozessor (2) lauffähigen zweiten Programmkomplex (Prog. II), der zumindest überwiegend mit den zweiten Speichermitteln des ersten Prozessors (2) zusammenwirkt, bei fehlerfreiem Lauf auf die Ein/Ausgänge der dem ersten Programmkomplex (Prog. I) zugeordneten Peripheriemittel (12) wenn überhaupt dann lediglich lesend zugreift und beim Erreichen festgelegter Bedingungen den ersten Prozessor (2) freigibt.

2. Systemarchitektur nach Anspruch 1, dadurch gekennzeichnet, daß unter den ersten Peripheriemittel (12) wenigstens eines ist, das für den ersten Programmkomplex (Prog. I) reserviert ist.

3. Systemarchitektur nach Anspruch 1, dadurch gekennzeichnet, daß es unter den der ersten Peripheriemittel (12) wenigstens eines gibt, auf das zulässigerweise sowohl von dem ersten Programmkomplex (Prog. I) als auch von dem zweiten Programmkomplex (Prog. II) schreibend und/oder lesend zuzugreifen ist.

4. Systemarchitektur nach Anspruch 1, dadurch gekennzeichnet, daß es einen Speicherbereich (25) gibt, über den der erste und der zweite Programmkomplex (Prog. I, Prog. II) miteinander kommunizieren.

5. Systemarchitektur nach Anspruch 1, dadurch gekennzeichnet, daß der Speicherbereich (25), über den der erste und der zweite Programmkomplex (Prog. I, Prog. II) miteinander kommunizieren in dem ersten und/oder dem zweiten Speichermittel (4,5) oder in nur einem der beiden Speichermittel (4,5) liegt.

6. Systemarchitektur nach Anspruch 1, dadurch gekennzeichnet, daß die ersten Speichermittel (4) für den ersten Programmkomplex (Prog. I) reserviert sind.

7. Systemarchitektur nach Anspruch 1, dadurch gekennzeichnet, daß die ersten und die zweiten Speichermittel 4,5) hardwaremäßig in einem gemeinsamen Speicher verwirklicht sind und daß eine erste Gruppe von Speicheradressen die ersten Speichermittel (4) und eine zweite Gruppe von Adressen die zweiten Speichermittel (5) bildet.

8. Systemarchitektur nach Anspruch 1, dadurch gekennzeichnet, daß die ersten und die zweiten Speichermittel (4,5) hardwaremäßig in getrennten Speichern verwirklicht sind.

9. Systemarchitektur nach Anspruch 1, dadurch gekennzeichnet, daß der erste Programmkomplex (Prog. I), wenn er den ersten Prozessor (2) zurückerhält überprüft, ob das Inhibitsignal noch vorhanden ist bzw. zwischenzeitlich nicht zurückgenommen wurde, ehe er es selbst löscht bzw. zurücknimmt.

10. Systemarchitektur nach Anspruch 1, dadurch gekennzeichnet, daß der erste Programmkomplex (Prog. I) ein Programmkomplex ist, der Sicherheitsfunktion hat.

11. Systemarchitektur nach Anspruch 1, dadurch gekennzeichnet, daß der erste Prozessor (2) eine Interruptsteuerung (8) aufweist, an die ein Timer (9) angeschlossen ist, und daß eine Bedingung, die dazu führt, daß der erste Programmkomplex (Prog. I) den ersten Prozessor (2) zurückerhält ein von dem Timer (9) ausgelöster Interrupt ist.

12. Systemarchitektur nach Anspruch 1, dadurch gekennzeichnet, daß die Bedingung zur Freigabe des ersten Prozessors (2) durch den betreffenden Programmkomplex (Prog. I, Prog.II) eine entsprechende Programmanweisung in dem betreffenden Programmkomplex (Prog. I, Prog. II) ist.

13. Systemarchitektur nach Anspruch 1, dadurch gekennzeichnet, daß die Befehle die den ersten Programmkomplex bilden (Prog. I) und/oder Daten die ausschließlich dem ersten Programmkoplex (Prog. I) zugeordnet sind in dem ersten Speichermittel (4) abgelegt sind.

14. Systemarchitektur nach Anspruch 1, dadurch gekennzeichnet, daß die Befehle die den zweiten Programmkomplex (Prog. II) bilden und/oder Daten die ausschließlich dem zweiten Programmkoplex (Prog. II) zugeordnet sind in dem zweiten Speichermittel (5) abgelegt sind.

15. Systemarchitektur nach Anspruch 1, dadurch gekennzeichnet, daß sie
einen zweiten Prozessor (3),
dem zweiten Prozessor (3) zugeordnete dritte Speichermittel (21),
dem zweiten Prozessor (3) zugeordnete dritte Peripheriemittel (23), wie Interfaceschaltungen und dgl., die mit dem zweiten Prozessor (3) verbundene Ein/Ausgänge aufweisen, und
einen auf dem zweiten Prozessor (3) laufenden dritten Programmkomplex aufweist, der mit den dritten Speichermittel (21) zusammenwirkt und mit den dritten Peripheriemitteln (23) kommuniziert.

16. Systemarchitektur nach Anspruch 15, dadurch gekennzeichnet, daß der erste und der zweite Prozessor (2,3) unterschiedlich voneinander sind.

17. Systemarchitektur nach Anspruch 15, dadurch gekennzeichnet, daß der dritte Programmkomplex sich aus der Sicht der dritten Peripheriemittel (23) überwiegend oder exakt genauso verhält, wie der erste Programmkomplex (Prog. I) aus der Sicht seiner Peripherimittel (12), soweit sie funktionsmäßig mit den dritten Peripheriemitteln (23) übereinstimmen.

18. Systemarchitektur nach Anspruch 15, dadurch gekennzeichnet, daß der erste (Prog.I) und der dritte Programmkomplex, abgesehen von einer eventuellen Kommunikation mit dem zweiten Programmkomplex (Prog.II) dieselbe Funktion erbringen sollen.

19. Systemarchitektur nach Anspruch 15, dadurch gekennzeichnet, daß der erste (Prog.I) und der dritte Programmkomplex zumindest zeitweise miteinander kommunizieren.

20. Systemarchitektur nach Anspruch 15, dadurch gekennzeichnet, daß die Kommunikation den Vergleich von von jedem der beiden Programmkomplexe berechneten Daten sowie von Daten umfasst, die von den zugehörigen Peripheriemitteln (12,23) geliefert werden oder wurde.

21. Systemarchitektur nach Anspruch 15, dadurch gekennzeichnet, daß noch weitere Prozessoren und Programmkomplexe vorzugsweise wenigstens ein weiterer Prozessor vorhanden ist.

22. Systemarchitektur nach einem oder mehreren vorausgehenden Ansprüche, dadurch gekennzeichnet, daß sie in einer Maschinensteuerung implementiert ist.

## Claims

1. System architecture (1),
with a first processor (2),
with first storage means (4) associated with the first processor (2),
with first peripheral means (12), such as interface circuits and the like, which are associated with the first processor (2) and which have inputs/outputs and inhibit inputs (16) connected to the first processor (2), wherein the latter serve to block the first peripheral means (12) against receiving data via the inputs when an inhibit signal has been transmitted to the inhibit inputs (16),
with a first program complex (Prog. I) which can run on the first processor (2) and which collaborates at least predominantly with the first storage means (4) ot the first processor (2) and operates in such a way that when it is running on the first processor (2), when fixed conditions are reached on the peripheral means (12) associated therewith it emits an inhibit signal and enables the first processor (2), and that as soon as it receives the first processor (2) back it takes back or cancels the inhibit signal.
with second storage means (5) associated with the first processor (2), with second peripheral means (13), such as interface circuits and the like, which are associated with the first processor (2) and have inputs/outputs connected to the first processor (2),
with a second program complex (Prog. II) which can run on the first processor (2) and which collaborates at least predominantly with the second storage means of the first processor (2), and if running is error-free it has read-only access if at all to the inputs/outputs of the peripheral means (12) associated with the first program complex (Prog. I) and when fixed conditions are reached it enables the first processor (2).

2. System architecture as claimed in Claim 1, characterised in that amongst the first peripheral means (12) at least one is reserved for the first program complex (Prog. I).

3. System architecture as claimed in Claim 1, characterised in that amongst the first peripheral means (12) there is at least one to which write and/or read access is permissible both by the first program complex (Prog. I) and by the second program complex (Prog. II).

4. System architecture as claimed in Claim 1, characterised in that there is a storage area (25) via which the first and second program complexes (Prog. I, Prog. II) communicate with one another.

5. System architecture as claimed in Claim 1, characterised in that the storage area (25) via which the first and second program complexes (Prog. I, Prog. II) communicate with one another lies in the first and/or the second storage means (4, 5) or in only one of the two storage means (4, 5).

6. System architecture as claimed in Claim 1, characterised in that the first storage means (4) are reserved for the first program complex (Prog. I).

7. System architecture as claimed in Claim 1, characterised in that the first and the second storage means (4, 5) are realised in hardware terms in a common store and that a first group of storage addresses forms the first storage means (4) and a second group of addresses forms the second storage means (5).

8. System architecture as claimed in Claim 1, characterised in that the first and the second storage means (4, 5) are realised in hardware terms in separate stores.

9. System architecture as claimed in Claim 1, characterised in that the first program complex (Prog. I), when it receives the first processor (2) back, checks whether the inhibit signal is still present or has not been taken back in the meantime, before itself cancelling it or taking it back.

10. System architecture as claimed in Claim 1, characterised in that the first program complex (Prog. I) is a program complex which has a safety function.

11. System architecture as claimed in Claim 1, characterised in that the first processor (2) has an interrupt control (8) to which a timer (9) is connected, and that a condition which leads to the first program complex (Prog. I) receiving the first processor (2) back is an interrupt triggered by the timer (9).

12. System architecture as claimed in Claim 1, characterised in that the condition for enabling the first processor (2) by means of the relevant program complex (Prog. I, Prog. II) is a corresponding program instruction in the relevant program complex (Prog. I, Prog. II).

13. System architecture as claimed in Claim 1, characterised in that the commands which form the first program complex (Prog. I) and/or data which are associated exclusively with the first program complex (Prog. I) are stored in the first storage means (4).

14. System architecture as claimed in Claim 1, characterised in that the commands which form the second program complex (Prog. II) and/or data which are associated exclusively with the second program complex (Prog. II) are stored in the second storage means (5).

15. System architecture as claimed in Claim 1, characterised in that it has a second processor (3),
third storage means (21) associated with the second processor (3),
third peripheral means (23), such as interface circuits and the like, which are associated with the second processor (3) and which have inputs/outputs connected to the second processor (3), and
a third program complex which runs on the second processor (3) and which collaborates with the third storage means (21) and communicates with the third peripheral means (23).

16. System architecture as claimed in Claim 15, characterised in that the first and the second processors (2, 3) are different from one another.

17. System architecture as claimed in Claim 15, characterised in that the third program complex behaves from the point of view of the third peripheral means (23) predominantlt or exactly in the same way as the first program complex (Prog. I) behaves from the point of view of its peripheral means (12), insofar as they correspond functionally to the third peripheral means (23).

18. System architecture as claimed in Claim 15, characterised in that the first program complex (Prog. I) and the third program complex should fulfil the same function apart from any communication with the second program complex (Prog. II).

19. System architecture as claimed in Claim 15, characterised in that the first program complex (Prog. I) and the third program complex communicate with one another at least at times.

20. System architecture as claimed in Claim 15, characterised in that the communication comprises the comparison of data calculated by each of the two program complexes as well as of data which are or have been supplied by the appertaining peripheral means (12. 23).

21. System architecture as claimed in Claim 15, characterised in that yet further processors and program complexes, preferably at least one further processor, is/are provided.

22. System architecture as claimed in one or more of the preceding claims, characterised in that it is implemented in a machine control.

## Revendications

1. Architecture de système (1) comprenant
un premier processeur (2)
des premiers moyens de mémoire (4) associés au premier processeur (2), des premiers moyens périphériques (12) associés au premier processeur (2), tels que des circuits d'interface et similaires qui comportent des entrées/sorties et des entrées de blocage (16), ces dernières servant à bloquer les premiers moyens périphériques (12) pour les empêcher d'accepter des informations par le biais des entrées lorsqu'un signal de blocage est envoyé aux entrées de blocage (16),
un premier système de programmes (Prog. I) pouvant tourner sur le premier processeur (2 ) qui coopère au moins essentiellement avec les premiers moyens de mémoire (4) du premier processeur (2 ) et travaille de manière telle que, lorsqu'il tourne sur le premier processeur, il délivre un signal de blocage et libère le premier processeur (2) lorsque des conditions déterminées sont atteintes au niveau des moyens périphériques (12) associés et que, dès qu'il reprend la main sur le premier processeur (2), il retire ou efface le signal de blocage,
des seconds moyens de mémoire (5) associés au premier processeur (2) des seconds moyens périphériques (13) associés au premier processeur (2), tels que des circuits d'interface et similaires qui comportent des entrées/sorties connectées au premier processeur (2),
un second système de programmes (Prog. II) pouvant tourner sur le premier processeur (2), qui coopère au moins essentiellement avec les seconds moyens de mémoire du premier processeur (2 ), lors d'un déroulement sans erreur accède, lorsque c'est le cas, uniquement en lecture aux entrées/sorties des moyens périphériques (12) associés au premier système de programmes (Prog. I) et libère le premier processeur (2) lorsque les conditions fixées sont atteintes.

2. Architecture de système selon la revendication 1, caractérisée par le fait que parmi les premiers moyens périphériques (12), l'un au moins est réservé au premier système de programmes (Prog. I).

3. Architecture de système selon la revendication 1, caractérisée par le fait qu'il y a parmi les premiers moyens périphériques (12) au moins un moyen périphérique auquel aussi bien le premier système de programmes (Prog. I) que le second système de programmes (Prog. II) peuvent accéder en écriture et/ou lecture.

4. Architecture de système selon la revendication 1, caractérisée par le fait qu'il existe une zone de mémoire (25) par l'intermédiaire de laquelle le premier système de programmes et le second système de programmes (Prog. I, Prog. II) communiquent l'un avec l'autre.

5. Architecture de système selon la revendication 1, caractérisée par le fait que la zone de mémoire (25) par l'intermédiaire de laquelle le premier système de programmes et le second système de programmes (Prog. I, Prog. II) communiquent l'un avec l'autre est située dans le premier et/ou dans le second moyen de mémoire (4, 5) ou seulement dans l'un des deux moyens de mémoire (4, 5).

6. Architecture de système selon la revendication 1, caractérisée par le fait que les premiers moyens de mémoire (4) sont réservés au premier système de programmes (Prog. I).

7. Architecture de système selon la revendication 1, caractérisée par le fait que les premiers et seconds moyens de mémoire (4, 5), sur le plan matériel, sont réalisés dans une mémoire commune et qu'un premier groupe d'adresses mémoire constitue les premiers moyens de mémoire (4) et un second groupe d'adresses mémoire constitue les seconds moyens de mémoire (5).

8. Architecture de système selon la revendication 1, caractérisée par le fait que les premiers et seconds moyens de mémoire (4, 5) sur le plan matériel sont réalisés dans des mémoires distinctes.

9. Architecture de système selon la revendication 1, caractérisée par le fait que le premier système de programmes (Prog. I) lorsqu'il reprend la main sur le premier processeur (2 ) contrôle si le signal de blocage est encore présent ou s'il a été retiré entre temps, avant de procéder lui-même à son effacement ou à son retrait.

10. Architecture de système selon la revendication 1, caractérisée par le fait que le premier système de programmes (Prog. I) est un système de programmes qui a une fonction de sécurité.

11. Architecture de système selon la revendication 1, caractérisée par le fait que le premier processeur (2 ) comporte une commande d'interruption (8) à laquelle est connecté un temporisateur (9) et par le fait qu'une condition qui permet au système de programmes (Prog. I) de reprendre la main sur le premier processeur (2 ) est une interruption déclenchée par l'horloge (9).

12. Architecture de système selon la revendication 1, caractérisée par le fait que la condition de libération du premier processeur (2 ) par le système de programmes concerné (Prog. I, Prog. II) est une instruction de programme correspondante dans le système de programmes concerné (Prog. I, Prog. II).

13. Architecture de système selon la revendication 1, caractérisée par le fait que les ordres qui constituent le premier système de programmes (Prog. I) et/ou des données qui sont associées exclusivement au premier système de programmes (Prog. I) sont mémorisés dans le premier moyen de mémoire (4).

14. Architecture de système selon la revendication 1, caractérisée par le fait que les ordres qui constituent le second système de programmes (Prog. II) et/ou des données qui sont associées exclusivement au second système de programmes (Prog. Il) sont mémorisés dans le second moyen de mémoire (4).

15. Architecture de système (1) selon la revendication 1, caractérisé par le fait qu'elle comprend
un second processeur (3)
des troisièmes moyens de mémoire (21) associés au second processeur (3), des troisièmes moyens périphériques (23) associés au second processeur (3), tels que des circuits d'interface et similaires qui comportent des entrées/sorties connectées au second processeur (3),
un troisième système de programmes pouvant tourner sur le second processeur ( 3) qui coopère avec les troisièmes moyens de mémoire (21) du premier processeur (2 ) et communique avec les troisièmes moyens périphériques (23).

16. Architecture de système selon la revendication 15, caractérisée par le fait que les premier et second processeurs (2, 3) sont différents l'un de l'autre.

17. Architecture de système selon la revendication 15, caractérisée par le fait que le troisième système de programmes, vis-à-vis des troisièmes moyens périphériques (23), se comporte essentiellement ou exactement comme le premier système de programmes (Prog. I) vis-à-vis de ses moyens périphériques (12), dans la mesure où ceux-ci correspondent aux troisièmes moyens périphériques (23) sur le plan fonctionnel.

18. Architecture de système selon la revendication 15, caractérisée par le fait que le premier système de programmes (Prog. I) et le troisième système de programmes, mis à part une éventuelle communication avec le second système de programmes (Prog. II) doivent avoir la même fonction.

19. Architecture de système selon la revendication 15, caractérisée par le fait que le premier système de programmes (Prog. I) et le troisième système de programmes communiquent au moins temporairement l'un avec l'autre.

20. Architecture de système selon la revendication 15, caractérisée par le fait que la communication comprend la comparaison de données calculées par chacun des deux systèmes de programmes ainsi que de données qui sont fournies ou ont été fournies par les moyens périphériques (12, 13) concernés.

21. Architecture de système selon la revendication 15, caractérisée par le fait qu'il existe encore d'autres processeurs et systèmes de programmes, de préférence au moins un processeur supplémentaire.

22. Architecture de système selon une ou plusieurs des revendications précédentes, caractérisée par le fait qu'elle est implémentée dans une commande de machine.
